# EUROPEAN PATENT SPECIFICATION

(11) **EP 3 543 178 B1**
(45) Date of publication and mention of the grant of the patent: **07.06.2023**
(21) Application number: 18162488.3
(22) Date of filing: 19.03.2018
(51) Int. Cl.: B65G 17/08

(54) **CONVEYOR BELT**
FÖRDERBAND
COURROIE DE TRANSPORTEUR

(43) Date of publication of application: 25.09.2019
(73) Proprietor: Logi Concept Engineering B.V., 7156 NW Beltrum (NL)
(72) Inventor: Brinkers, Joep Hendrik, 7152 KV Eibergen (NL)
(74) Representative: 't Jong, Bastiaan Jacob

(56) References cited:
- WO-A1-98/14396
- US-A- 5 921 379
- US-A1- 2004 112 720

## Description

The invention relates to a conveyor belt comprising a plurality of adjacent conveyor belt elements and a plurality of rods connecting adjacent conveyor belt elements, wherein each belt element comprises:
- an elongate body having a support surface;
- first protrusions arranged on a first side of the elongate body and having aligned openings;
- second protrusions arranged on a second side opposite of the first side and having aligned openings,
   wherein the first protrusions interlock with second protrusions of an adjacent belt element and a connecting rod extends through the openings of the interlocked first and second protrusions, and
   wherein at least some of the belt elements further comprise a friction layer arranged on the support surface.

Such a conveyor belt is known from WO 2012024164. This publication discloses a conveyor belt having conveyor belt elements composed out of two materials. An elongate body with protrusion to interlock with adjacent belt elements of a rigid and strong material, is provided at the top with a layer of high friction material. To ensure a good coupling between the two materials, the elongate body is provided with a dense array of teeth, between which and over which the high friction material is moulded.

Injection moulding the elongate element with a dense array of teeth requires an expensive mould in order to reliably shape the array of teeth. The teeth also increase the height of the friction layer. As these teeth are embedded in the friction layer and also a minimal thickness of the friction layer for wear is required, the overall thickness of the friction layer is larger, than without the array of teeth.

As the teeth are small, they will also be flexible, such that with any friction forces exerted onto the friction layer, the teeth will move along with any stretch and compression within the friction layer. After time, the connection between the teeth and the friction material will come loose. Another example of a prior art conveyor belt is known from WO 98/14396 A1 which discloses the preamble of claim 1.

In the case of curved conveyor belts, the speed of the conveyor belt is limited by the friction force between the support surface of the conveyor belt and the product supported on the conveyor belt in combination with the centrifugal force the product will be subjected to as a result of the belt speed.

When products shrink wrapped in a foil, such as six packs of soda cans, are transported over such curved conveyor belt, the irregular shaped bottom of the products contributes to the obtained friction between the products and the conveyor belt. However, there is a desire to reduce the amount of plastic, such that products are more and more packaged in cardboard sleeves. As a result of the cardboard sleeves, the bottom of a products is typically flat, which reduces the friction with the conveyor belt. Furthermore, typically a coated smooth cardboard is used to provide a glossy appearance to the packaging, which further reduces the friction with the conveyor belt.

The reduction in friction can be compensated by using plastic materials of with higher friction coefficient for the friction layer. However, plastic materials with a higher friction coefficient, typically tend to have also a higher elasticity.

When for example a six pack of soda cans wrapped in a cardboard sleeve enters a curved conveyor belt, a rectangular surface of the sleeve is in contact with the belt elements. As the belt elements of the curved conveyor belt taper, there will be constant speed differences between the rectangular surface of the sleeve and the curved conveyor belt. As a result the friction layer of the belt elements will be subjected to torsional forces, causing varying stretch and compression within the friction layer.

Due to the varying stretch and compression within the friction layer, the friction layer will be massaged off from the support surface of the elongate body after time.

It is an object of the invention to reduce or even remove the above mentioned disadvantages.

This object is achieved according to the invention with a conveyor belt according to claim 1.

With the through holes the friction layer material also extends to the opposite surface of the elongate body, such that a mechanical lock for the friction layer is obtained besides the already present adhesive connection of the friction layer to the support surface of the elongate body.

If the adhesive connection would be lost after time, the friction layer material will still be connected to the elongate body via the mechanical lock provided by the through holes and the friction layer material arranged on the opposite surface of the elongate body.

The conveyor belt according to the invention the friction layer material extending through a pair of through holes is connected to each other via friction layer material extending over the opposite surface of the elongate body and between the pair of through holes.

The friction layer material forms a loop through the pair of through holes and along the opposite surface, such that a shape defined connection is obtained between the friction surface material and the elongate body. As a result the friction layer material can only get loose from the elongate body by tearing the material. So, a very strong, durable and reliable connection is obtained.

In a further preferred embodiment of the conveyor belt according to the invention each pair of through holes is aligned with either a first protrusion or a second protrusion.

The friction layer material extending over the opposite surface and between the through holes will be centered in transport direction of the conveyor belt with a first or second protrusion. Typically strengthening ribs will extend from one end of a first protrusion to an end of an opposite second protrusion, such that a zig-zag pattern of ribs, first and second protrusions is obtained. By aligning the pair of through holes with either a first or second protrusion, the part of friction surface material arranged on the opposite side of the elongate body is accommodated in the spaces of this zag-zag pattern.

In yet another embodiment of the conveyor belt according to the invention, the support surface is provided with a number of elongate grooves extending in longitudinal direction of the body to provide an increased surface area for the friction layer to adhere to.

The increased surface area allows for the friction layer material to adhere over a larger surface, such that the peel force, i.e. the force required to peel the friction material of the elongate body, is increased.

Preferably, the friction layer material is polyurethane. Polyurethane provides a high friction, has a high strength and can easily be used in injection moulding.

It is further preferred that the elongate body is of polyamide. Polyamide provides a durable and strong belt element, providing a good life time for the conveyor belt constructed from these belt elements.

In yet another preferred embodiment of the conveyor belt according to the invention the elongate body and friction layer are arranged onto each other by two component injection moulding.

These and other features of the invention will be elucidated in conjunction with the accompanying drawings.
Figure 1 shows a perspective view from above of a conveyor belt element according to the invention.
Figure 2 shows a perspective view from below of a conveyor belt element according to the invention.
Figure 3 shows a longitudinal cross-sectional view of the conveyor belt element according to figure 2.
Figure 4 shows a transverse cross-sectional view of the conveyor belt element according to figure 2.
Figure 5 shows a schematic top view of a conveyor belt according to the invention.

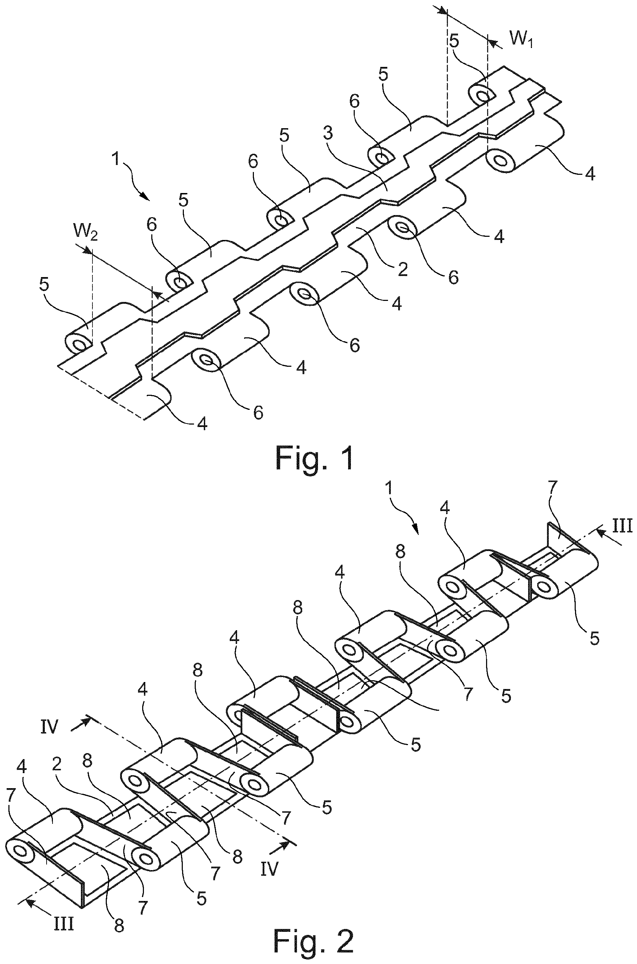

Figure 1 shows a perspective view from above of a conveyor belt element 1 according to the invention. The conveyor belt element 1 has an elongate body 2 on which a friction layer 3 is arranged. First protrusions 4 and second protrusions 5 are arranged on opposite sides of the elongate body 2. Each of the first and second protrusions 4, 5 are provided with openings 6 for passage of a rod (not shown) to compose a conveyor belt out of the conveyor belt elements 1.

The elongate body 2 tapers, such that the elongate body 2 has on one end a width w₁ and on the other end a width w₂, wherein w₂>w₁.

Figure 2 shows a perspective view from below of the conveyor belt element 1. The first protrusions 4 and second protrusions 5 are connected along the elongate body 2 and by ribs 7, such that a zig-zag patterns is provided and to provide strength to the conveyor belt element 1.

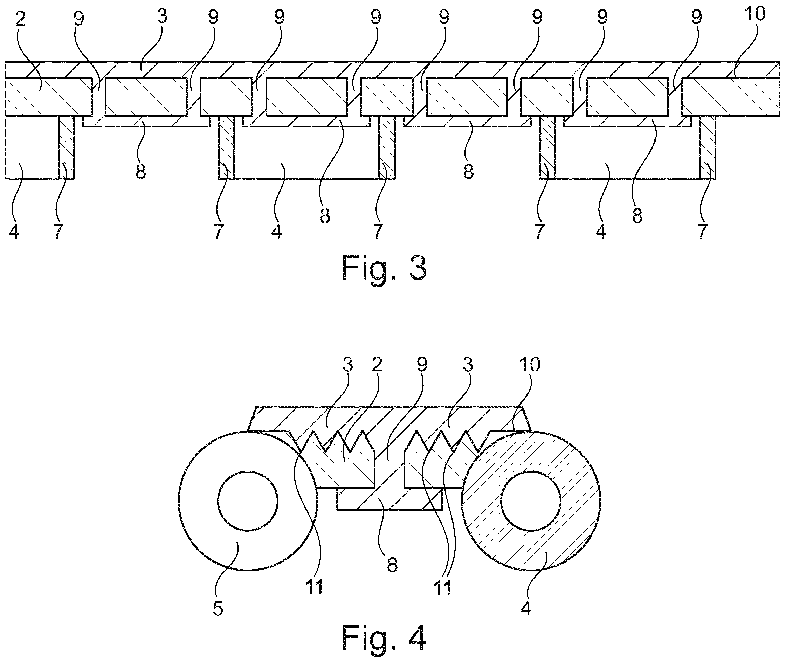

In the spaces between the ribs 7, friction layer material pads 8 extend. These pads 8 are integrally connected via the friction layer material extending though the through holes 9 with the friction layer 3 arranged on the support surface 10 of the elongate body 2. (see figure 3)

As shown in figure 4, which is a transverse cross-sectional view, the support surface 10 of the elongate body 2 is provided with longitudinal grooves 11 to increase the contact surface between the elongate body 2 and the friction layer 3.

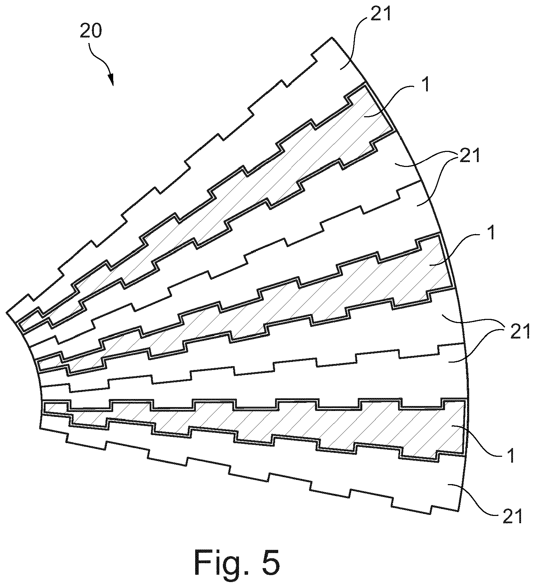

Figure 5 shows a schematic top view of a conveyor belt 20 according to the invention. Due to the tapering shape of the conveyor belt elements 1, 21, a curved conveyor belt 20 is provided. In some applications it is not required that each conveyor belt element 1 is provided with a friction layer. Therefore, with the conveyor belt 20 according to the invention, the conveyor belt elements 1 provided with friction layer and conveyor belt elements 21 without friction layer can be alternated.

## Claims

1. Conveyor belt comprising a plurality of adjacent conveyor belt elements and a plurality of rods connecting adjacent conveyor belt elements, wherein each belt element comprises:
- an elongate body having a support surface;
- first protrusions arranged on a first side of the elongate body and having aligned openings;
- second protrusions arranged on a second side opposite of the first side and having aligned openings,
wherein the first protrusions interlock with second protrusions of an adjacent belt element and a connecting rod extends through the openings of the interlocked first and second protrusions, and
wherein at least some of the belt elements further comprise a friction layer arranged on the support surface,
wherein the support surface is provided with a plurality of through holes extending from the support surface to the opposite surface of the elongate body, and wherein the friction layer material extends through the through holes and at least partially over the opposite surface of the elongate body to provide anchoring elements for the friction layer
**characterized in that**
the elongate body widens linearly from one longitudinal end to the other longitudinal end, wherein the friction layer material extending through a pair of through holes is connected to each other via friction layer material extending over the opposite surface of the elongate body and between the pair of through holes.

2. Conveyor belt according to claim 1, wherein each pair of through holes is aligned with either a first protrusion or a second protrusion.

3. Conveyor belt according to any of the preceding claims, wherein the support surface is provided with a number of elongate grooves extending in longitudinal direction of the body to provide an increased surface area for the friction layer to adhere to.

4. Conveyor belt according to any of the preceding claims, wherein the friction layer material is polyurethane.

5. Conveyor belt according to any of the preceding claims, wherein the elongate body is of polyamide.

6. Conveyor belt according to any of the preceding claims, wherein the elongate body and friction layer are arranged onto each other by two component injection moulding.

## Patentansprüche

1. Förderband, umfassend eine Vielzahl von benachbarten Förderbandelementen und eine Vielzahl von Stäben, die benachbarte Förderbandelemente verbinden, wobei jedes Bandelement umfasst:
- einen länglichen Körper mit einer Stützfläche;
- erste Vorsprünge, die auf einer ersten Seite des länglichen Körpers angeordnet sind und ausgerichtete Öffnungen aufweisen;
- zweite Vorsprünge, die auf einer zweiten Seite gegenüber der ersten Seite angeordnet sind und ausgerichtete Öffnungen aufweisen,
wobei die ersten Vorsprünge mit zweiten Vorsprüngen eines benachbarten Bandelements ineinandergreifen und sich ein Verbindungsstab durch die Öffnungen der ineinandergreifenden ersten und zweiten Vorsprünge erstreckt und
wobei mindestens einige der Bandelemente weiter eine Reibungsschicht umfassen, die auf der Stützfläche angeordnet ist,
wobei die Stützfläche mit einer Vielzahl von Durchgangslöchern, die sich von der Stützfläche zur gegenüberliegenden Oberfläche des länglichen Körpers erstrecken, versehen ist und wobei sich das Reibungsschichtmaterial durch die Durchgangslöcher und mindestens teilweise über die gegenüberliegende Oberfläche des länglichen Körpers erstreckt, um Verankerungselemente für die Reibungsschicht bereitzustellen,
**dadurch gekennzeichnet, dass**
der längliche Körper von einem Längsende zum anderen Längsende linear breiter wird, wobei sich das Reibungsschichtmaterial, das sich durch ein Paar Durchgangslöcher erstreckt, über ein Reibungsschichtmaterial, das sich über die gegenüberliegende Oberfläche des länglichen Körpers und zwischen dem Paar Durchgangslöcher erstreckt, miteinander verbunden ist.

2. Förderband nach Anspruch 1, wobei jedes Paar Durchgangslöcher an entweder einem ersten Vorsprung oder einem zweiten Vorsprung ausgerichtet ist.

3. Förderband nach einem der vorstehenden Ansprüche, wobei die Stützfläche mit einer Anzahl länglicher Nuten, die sich in Längsrichtung des Körpers erstrecken, versehen ist, um einen vergrößerten Oberflächenbereich bereitzustellen, an dem die Reibungsschicht haften kann.

4. Förderband nach einem der vorstehenden Ansprüche, wobei das Reibungsschichtmaterial Polyurethan ist.

5. Förderband nach einem der vorstehenden Ansprüche, wobei der längliche Körper aus Polyamid ist.

6. Förderband nach einem der vorstehenden Ansprüche, wobei der längliche Körper und die Reibungsschicht durch Zweikomponentenspritzgießen aufeinander angeordnet sind.

## Revendications

1. Courroie transporteuse comprenant une pluralité d'éléments de courroie transporteuse adjacents et une pluralité de tiges reliant des éléments de courroie transporteuse adjacents, dans laquelle chaque élément de courroie comprend :
- un corps allongé présentant une surface de support ;
- des premières saillies agencées sur un premier côté du corps allongé et présentant des ouvertures alignées ;
- des secondes saillies agencées sur un second côté opposé au premier côté et présentant des ouvertures alignées,
dans laquelle les premières saillies s'emboîtent avec des secondes saillies d'un élément de courroie adjacent et une tige de liaison s'étend à travers les ouvertures des premières et secondes saillies emboîtées, et
dans laquelle au moins certains des éléments de courroie comprennent en outre une couche de frottement agencée sur la surface de support,
dans laquelle la surface de support est pourvue d'une pluralité de trous traversants s'étendant à partir de la surface de support jusqu'à la surface opposée du corps allongé, et dans laquelle le matériau de couche de frottement s'étend à travers les trous traversants et au moins partiellement sur la surface opposée du corps allongé pour fournir des éléments d'ancrage pour la couche de frottement
**caractérisée en ce que**
le corps allongé s'élargit de manière linéaire à partir d'une extrémité longitudinale jusqu'à l'autre extrémité longitudinale, dans laquelle le matériau de couche de frottement s'étendant à travers une paire de trous traversants est relié à chacun d'eux via un matériau de couche de frottement s'étendant sur la surface opposée du corps allongé et entre la paire de trous traversants.

2. Courroie transporteuse selon la revendication 1, dans laquelle chaque paire de trous traversants est alignée soit sur une première saillie soit sur une seconde saillie.

3. Courroie transporteuse selon l'une quelconque des revendications précédentes, dans laquelle la surface de support est pourvue d'un certain nombre de rainures allongées s'étendant dans une direction longitudinale du corps pour fournir une superficie accrue pour que la couche de frottement y adhère.

4. Courroie transporteuse selon l'une quelconque des revendications précédentes, dans laquelle le matériau de couche de frottement est du polyuréthanne.

5. Courroie transporteuse selon l'une quelconque des revendications précédentes, dans laquelle le corps allongé est en polyamide.

6. Courroie transporteuse selon l'une quelconque des revendications précédentes, dans laquelle le corps allongé et la couche de frottement sont agencés l'un sur l'autre par un moulage par injection à deux composants.
